(19) **Europäisches Patentamt / European Patent Office / Office européen des brevets**

(11) **EP 3 200 957 B1**

(12) **FASCICULE DE BREVET EUROPEEN**

(45) Date de publication et mention de la délivrance du brevet:
**13.01.2021 Bulletin 2021/02**

(21) Numéro de dépôt: **15788113.7**

(22) Date de dépôt: **29.09.2015**

(51) Int Cl.:
*B25B 27/16* (2006.01)   *F01D 25/28* (2006.01)

(86) Numéro de dépôt international:
**PCT/FR2015/052605**

(87) Numéro de publication internationale:
**WO 2016/051080 (07.04.2016 Gazette 2016/14)**

(54) **SYSTEME A EXTRACTION DE DEMONTAGE POUR UNE TURBOMACHINE**

DEMONTIEREXTRAKTIONSSYSTEM FÜR EINE TURBOMASCHINE

DISSASSEMBLY EXTRACTION SYSTEM FOR A TURBOMACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2014 FR 1459247**

(43) Date de publication de la demande:
**09.08.2017 Bulletin 2017/32**

(73) Titulaire: **SAFRAN AIRCRAFT ENGINES**
**75015 Paris (FR)**

(72) Inventeurs:
• **LEUTARD, Florence, Irene, Noelle**
**77210 Samoreau (FR)**
• **BAUDUIN, Pierrick, Raphael, Americo**
**14000 Caen (FR)**

• **RENON, Olivier**
**77540 Courpalay (FR)**
• **SULTANA, Patrick**
**91330 Yerres (FR)**

(74) Mandataire: **Cabinet Camus Lebkiri**
**25 rue de Maubeuge**
**75009 Paris (FR)**

(56) Documents cités:
| | |
|---|---|
| DE-B1- 2 522 817 | DE-B1- 2 522 817 |
| GB-A- 654 747 | GB-A- 654 747 |
| US-A1- 2008 193 289 | US-A1- 2010 101 065 |
| US-A1- 2010 101 065 | US-A1- 2013 175 773 |
| US-A1- 2013 175 773 | |

EP 3 200 957 B1

# Description

## DOMAINE TECHNIQUE DE L'INVENTION

Le domaine de l'invention est relatif aux douilles d'extraction permettant le démontage de deux pièces solidarisées par frettage.

L'invention trouve une application particulièrement intéressante dans le domaine de l'aéronautique et permet notamment l'extraction de liaison cylindrique frettée, comme par exemple au niveau de l'interface entre la tôle d'étanchéité et le support tube d'éjection d'une turbomachine.

## ARRIÈRE PLAN TECHNOLOGIQUE DE L'INVENTION

Une turbomachine ou turboréacteur comporte de nombreuses liaisons boulonnées se trouvant aussi bien dans la partie « stator » que dans la partir « rotor » de la turbomachine. Certaines de ces liaisons boulonnées sont également accompagnées d'une liaison cylindrique frettée.

Il est parfois nécessaire de démonter ces liaisons, notamment lors des opérations de maintenance. Pour démonter notamment deux brides frettées entre elles, il est d'usage d'utiliser des moyens d'extraction, tels que des douilles à vis, pour éviter de détériorer les brides lors du démontage. Ces douilles d'extraction sont solidarisées sur une des brides de l'interface et permettent d'écarter les deux brides d'une liaison frettée.

Pour éviter que la douille d'extraction ne tombe lors de l'opération de frettage ou pour s'assurer que le couple induit par la vis d'extraction sera supporté par la liaison entre la douille d'extraction et la bride qui la supporte, il est connu de souder les douilles d'extraction.

Toutefois, les douilles d'extraction soudées sur la bride posent certaines difficultés. En effet, la soudure de la douille peut occasionner une déformation de la bride dans une zone proche de la soudure, notamment lorsque les brides sont de faibles épaisseurs, par exemple de l'ordre de quelques millimètres, typiquement de l'ordre de 3 à 4 millimètres.

Une solution pour résoudre les problèmes mentionnés précédemment consiste à fretter simplement les douilles d'extraction dans les orifices des brides qui sont prévus à cet effet. Toutefois, avec cette solution de frettage, il existe un risque de glissement de la douille dans la bride en cas de mauvais dimensionnement de ce frettage, ce qui rendrait inutilisable la douille d'extraction, en effet celle-ci tournerait dans son logement lors de la tentative d'extraction, sous les effets des frottements de la vis d'extraction dans les filets de la douille. Un autre problème pourrait être la détérioration de la douille si le frettage est trop important.

Le document US 2008 193 289 décrit une tige d'extraction comprenant un trou traversant axial pourvu d'un filetage intérieur et une tête disposée dans un renfoncement de l'aube conductrice.

## DESCRIPTION GÉNÉRALE DE L'INVENTION

Dans ce contexte, l'invention vise à apporter une solution aux problèmes mentionnés ci-dessus, et vise à proposer une douille d'extraction permettant de garantir la faisabilité du démontage de deux pièces frettées et de s'affranchir de l'utilisation de soudure de manière à garantir la planéité des interfaces de contact.

L'invention a pour objet un système à extraction de démontage qui comporte, pour une turbomachine :

- une première pièce de révolution présentant une bride de fixation et une deuxième pièce de révolution présentant une bride de fixation, les deux pièces de révolution étant assemblées par frettage au niveau de leur bride de fixation ;
- une pluralité de douilles d'extraction chacune comportant :

  - une tête ;
  - un corps de forme cylindrique, la partie interne du corps cylindrique présentant un pas de vis adapté pour permettre le vissage d'une vis d'extraction ;

- ladite bride de fixation de la première pièce de révolution présentant une pluralité d'orifices répartis sur le pourtour de ladite bride adaptés pour recevoir lesdites douilles d'extraction ;
- la tête de la douille d'extraction selon l'invention présente une partie conique formant un moyen de frottement adapté pour venir au contact de l'une des pièces de révolution, ledit moyen de frottement étant dimensionné de manière à déterminer un couple limite de glissement supérieur au couple de frottement généré au niveau du pas de vis de la douille par le vissage de la vis d'extraction.

Ainsi, le système d'extraction selon l'invention permet de s'affranchir d'une opération de soudure de la douille sur la bride, ce qui permet d'éviter une déformation de la bride, notamment lorsque celle-ci est de faible épaisseur (typiquement de l'ordre de quelques millimètres).

Grâce au système selon l'invention, plus l'effort d'extraction est important, plus le cône de la tête de la douille génère un couple important. Ainsi, la douille permet d'extraire des pièces présentant un frettage avec une force d'extraction importante.

La douille d'extraction peut également présenter une ou plusieurs des caractéristiques ci-dessous, considérées individuellement ou selon toutes les combinaisons techniquement possibles :

- la partie conique de la tête présente un angle d'inclinaison $\alpha$ par rapport à l'axe longitudinal de la douille ;
- l'angle d'inclinaison $\alpha$ est compris entre 10° et 60° ;

- l'angle d'inclinaison α est égal à 45°.

Avantageusement, le système comporte une pluralité de vis d'extraction présentant un pas de vis adapté pour coopérer avec ladite pluralité de douilles d'extraction.

L'invention sera mieux comprise à la lumière de la description qui suit.

## BREVE DESCRIPTION DES FIGURES

D'autres caractéristiques et avantages de l'invention ressortiront à la lecture de la description qui suit, en référence aux figures annexées.

La figure 1 illustre en perspective une partie d'une liaison cylindrique, réalisée par frettage, entre deux pièces de révolution d'une turbomachine, présentant un premier mode de réalisation d'une douille du système d'extraction selon l'invention.

La figure 2 représente une vue en coupe de la liaison illustrée à la figure 1.

La figure 3 illustre un deuxième mode de réalisation d'une douille du système d'extraction selon l'invention.

## DESCRIPTION DÉTAILLÉE DE MODES DE RÉALISATION DE L'INVENTION

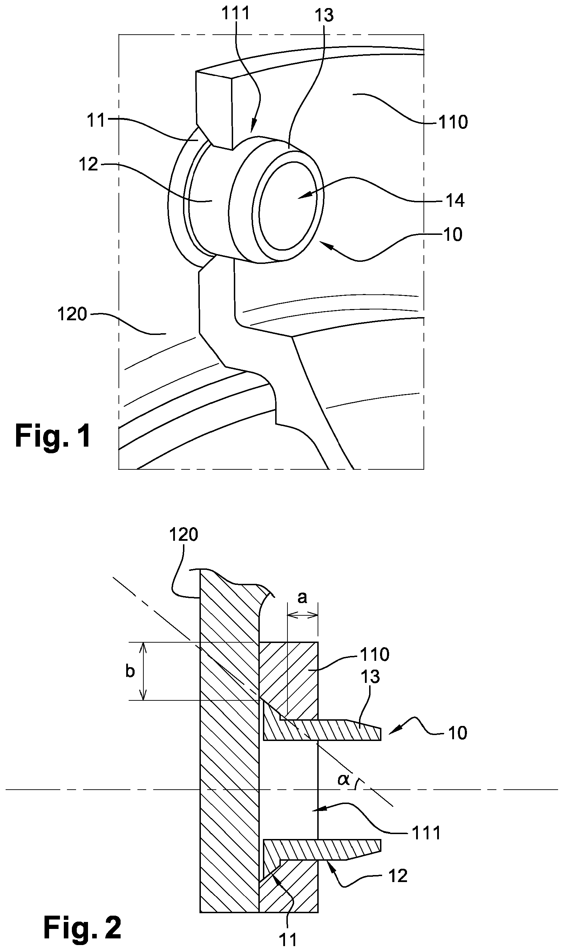

La figure 1 illustre en perspective une partie d'une liaison cylindrique, réalisée par frettage, entre deux pièces de révolution d'une turbomachine. Ce type de liaison par frettage est notamment réalisé en complément des liaisons boulonnées (non représentées) réalisées comme par exemple entre la tôle d'étanchéité et le support de tube d'éjection d'une turbomachine.

L'assemblage de deux pièces de révolution d'une turbomachine est réalisé au moyen de brides de fixation. La figure 1 illustre en particulier les deux brides de fixation 110 et 120 des deux pièces de révolution à assembler. La figure 2 est une vue en coupe de cet assemblage.

Comme vu précédemment, en complément des moyens de fixation de type boulonnage utilisés pour réaliser l'assemblage de deux pièces de révolution dans une turbomachine, il est également connu de réaliser une liaison par frettage à chaud entre ces deux pièces, permettant ainsi de réaliser un moyen de fixation additionnel.

La douille du système d'extraction 10 selon l'invention permet d'exercer une contrainte mécanique adaptée pour désassembler ces deux pièces frettées lorsque les moyens de liaisons de type boulonnage sont retirés.

Les douilles d'extraction 10 sont positionnées sur l'une des deux brides de fixation 110, 120. Dans l'exemple de réalisation illustré aux figures 1 et 2, les douilles d'extraction 10 sont positionnées sur la bride 110 (une seule douille étant illustrée sur les figures), de manière à extraire la bride 120. A cet effet, la bride 110 présente une pluralité d'orifices 111 réparties sur le pourtour de la bride 110 de manière à permettre le montage des douilles du système d'extraction 10 selon l'invention. La répartition des douilles d'extraction sur le pourtour de la bride 110 permet ainsi de répartir l'effort d'extraction sur l'ensemble des douilles 10.

La douille du système d'extraction 10 selon l'invention présente :

- une première partie 11 formant la tête de la douille 10 ; cette première partie 11 étant sensiblement de forme conique ;

- une deuxième partie 12 formant le corps de la douille 10 ; cette deuxième partie étant sensiblement de forme cylindrique.

Avantageusement, le corps 12 de la douille 10 présente au niveau de sa deuxième extrémité, i.e. à l'extrémité opposée à la tête 11 de la douille 10, une partie chanfreinée 13 diminuant ainsi le diamètre extérieur du corps de la douille 10. Cette partie chanfreinée 13 permet de faciliter le positionnement de la douille 10 dans les orifices 111 de la bride 110 lors des opérations de montage.

La douille 10 présente également un alésage traversant taraudé 14 adapté pour recevoir une vis d'extraction (non représenté). Avantageusement, la douille d'extraction 10 est taraudée avec un filetage à pas fin de manière à recevoir des vis d'extractions classiques.

La tête 11 de la douille d'extraction 10 présente une forme sensiblement conique. L'angle d'inclinaison du cône de la tête 11 est noté α et représente l'angle d'inclinaison du cône par rapport à l'axe longitudinale de la douille 10.

Pour intégrer la douille dans la bride 110, l'orifice 111 présente une fraisure permettant de recevoir la tête fraisée 11 (conique) de la douille 10. La fraisure de l'orifice 111 est réalisée au niveau de la face de la bride 110 située à l'interface des deux brides frettées 110, 120. Bien entendu, l'angle d'inclinaison de la fraisure correspond à l'angle d'inclinaison α du cône de la tête 11 de la douille 10.

La douille 10 est avantageusement assemblée en force (ou frettée à froid) dans les orifices 111, sur sa partie cylindrique pour éviter que celle-ci ne tombe de l'orifice 111 pendant les opérations de manipulation des brides ou encore les des opérations de montage/démontage. Toutefois, l'assemblage en force de la douille 10 n'est pas destiné à résister au couple de frottement généré par la vis d'extraction dans les filets de la douille lors de l'opération d'extraction.

Ainsi, lors du vissage de la vis d'extraction (non représentée) dans la douille 10, la vis va avoir son extrémité libre qui vient en butée contre la deuxième bride 120 et la partie conique de la douille 10 va venir se plaquer contre la fraisure de l'orifice 111. Les deux faces coniques en contact génèrent alors un couple de frottement et les brides tendent à s'écarter pour l'extraction. Les deux faces coniques ne glisseront pas l'une par rapport à l'autre tant que le couple limite de glissement n'est pas atteint. Ce couple limite de glissement est fonction :

- de l'angle d'inclinaison $\alpha$ ;
- de l'effort de plaquage de la douille 10 qui correspond à l'effort d'extraction nécessaire pour extraire les deux brides frettées 110, 120 ;
- du coefficient de frottement entre les deux matières de 110 et 120 ;
- de la géométrie de la douille 10.

Le couple limite de glissement entre les deux parties coniques de la douille et de la bride ou le moment transmissible par la douille sans que celle-ci ne bouge est alors donné par la formule suivante :

$$M_{transmissible} = \frac{2}{3\sin\alpha} f N \frac{(R^3 - r^3)}{(R^2 - r^2)}$$

Avec :

- $f$ le coefficient de frottement de la partie conique entre la douille et la bride :
- $N$ l'effort axial généré sur la douille par le vissage de la vis d'extraction :
- $R$ le rayon du cône dans sa partie la plus large par rapport à l'axe de rotation de la douille :
- $r$ le rayon du cône dans sa partie la plus fine par rapport à l'axe de rotation de la douille :
- $\alpha$ l'angle d'inclinaison du cône.

Ainsi, l'angle d'inclinaison $\alpha$ du cône est déterminé de sorte que le couple de glissement limite entre les parties coniques soit supérieur au couple de frottement induit par la vis d'extraction lors du vissage de celle-ci dans la douille 10.

Avantageusement, l'angle d'inclinaison $\alpha$ du cône est compris entre 10° et 60°. Selon un mode de réalisation particulièrement avantageux de l'invention, l'angle d'inclinaison est choisi proche de 45°.

Toutefois, il convient de vérifier que l'angle d'inclinaison $\alpha$ du cône choisi permet de respecter certaines contraintes d'intégration existantes dans la turbomachine. Ainsi, il est nécessaire de respecter certaines contraintes dimensionnelles, notamment la distance minimale de la fraisure de l'orifice 111 par rapport à l'extrémité périphérique de la bride 110, référencée b sur la figure 2, ainsi que l'épaisseur de matière minimum au niveau de la partie rectiligne de l'orifice 111 permettant de reprendre les efforts de la douille, référencée a sur la figure 2.

A titre d'exemple, la distance minimale de l'orifice 111 par rapport à l'extrémité de la bride 110 est typiquement de l'ordre de 2 à 5 mm, avec une valeur minimum de 1mm et l'épaisseur de la bride au niveau de la partie rectiligne de l'orifice 111 est au moins égale à 1mm, et préférentiellement supérieure à 2mm.

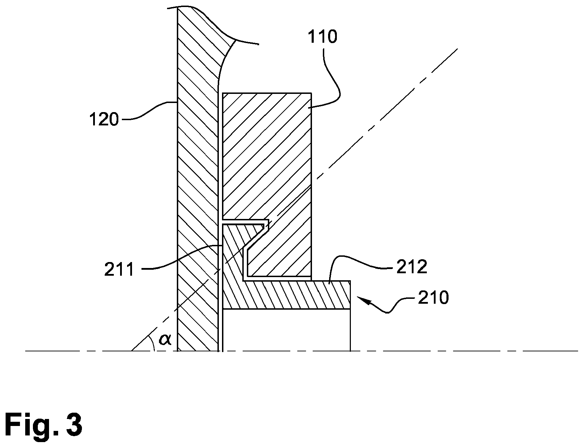

La figure 3 illustre une variante de réalisation de la douille du système d'extraction 210 de l'invention. Dans cet exemple de réalisation, la surface de contact est obtenue par la forme de la tête 211 de la douille en forme de champignon qui présente une partie sensiblement perpendiculaire à l'axe longitudinal de la douille se terminant par un épaulement circulaire chanfreiné dans sa partie inférieure selon un angle d'inclinaison $\alpha$ de manière à former un cône de frottement tel que décrit dans le premier mode de réalisation.

Bien entendu, la fraisure de la bride 110 est adaptée et présente une forme complémentaire de la forme de la tête 211 de la douille 210.

## Revendications

1.  Système à extraction de démontage pour une turbomachine, :

    - une première pièce de révolution présentant une bride de fixation (110) et une deuxième pièce de révolution présentant une bride de fixation (120), les deux pièces de révolution étant assemblées par frettage au niveau de leur bride de fixation ;
    - une pluralité de douilles d'extraction (10, 210), chacune comportant ;

        - une tête (11, 211) ;
        - un corps (12, 212) de forme cylindrique, la partie interne du corps (12, 212) cylindrique présentant un pas de vis adapté pour permettre le vissage d'une vis d'extraction ;

    ladite bride de fixation (110) de la première pièce de révolution présentant une pluralité d'orifices (111) répartis sur le pourtour de ladite bride (110) adaptés pour recevoir lesdites douilles d'extraction (10, 210) ;

        - **caractérisé en ce que** la tête (11, 211) présente une partie conique formant un moyen de frottement adapté pour venir au contact de la première pièce de révolution, ledit moyen de frottement étant dimensionné de manière à déterminer un couple limite de glissement supérieur au couple de frottement généré au niveau du pas de vis de chaque douille par le vissage de la vis d'extraction.

2.  Système à extraction de démontage pour une turbomachine selon la revendication précédente **ca-**

**ractérisée en ce que** la partie conique de la tête de chaque douille d'extraction (10, 210) de ladite pluralité présente un angle d'inclinaison $\alpha$ par rapport à l'axe longitudinal de la douille.

3. Système à extraction de démontage pour une turbomachine selon la revendication précédente **caractérisée en ce que** l'angle d'inclinaison $\alpha$ est compris entre 10° et 60°.

4. Système à extraction de démontage pour une turbomachine selon la revendication 2 **caractérisée en ce que** l'angle d'inclinaison $\alpha$ est égal à 45°.

5. Système à extraction de démontage pour une turbomachine selon l'une des revendication précédentes **caractérisé en ce qu'**il comporte une pluralité de vis d'extraction présentant un pas de vis adapté pour coopérer avec ladite pluralité de douilles d'extraction (10, 210).

**Patentansprüche**

1. System zur Abbau-Extraktion für eine Turbomaschine:

    - ein erstes Revolutionsstück, das einen Befestigungsflansch (110) aufweist, und ein zweites Revolutionsstück, das einen Befestigungsflansch (120) aufweist, wobei die zwei Revolutionsstücke per Frettieren an ihrem Befestigungsflansch zusammengebaut sind;
    - eine Vielzahl von Extraktionsbüchsen (10, 210), wobei jede umfasst;

        - einen Kopf (11, 211);
        - einen Körper (12, 212) in zylindrischer Form, wobei der innere Teil des zylindrischen Körpers (12, 212) einen Gewindeschritt aufweist, der geeignet ist, um das Verschrauben einer Abzugsschnecke zu ermöglichen;

    wobei der genannte Befestigungsflansch (110) des ersten Revolutionsstücks eine Vielzahl von Öffnungen (111) aufweist, die auf dem Umfang des genannten Flansches (110) verteilt und geeignet sind, um die genannten Extraktionsbüchsen (10, 210) zu empfangen:

        - **dadurch gekennzeichnet, dass** der Kopf (11, 211) einen konischen Teil aufweist, der ein Reibungsmittel bildet, das geeignet ist, mit dem ersten Revolutionsteil in Kontakt zu kommen, wobei das genannte Reibungsmittel derart ausgelegt ist, dass es ein Gleitbegrenzungsmoment bestimmt, das größer ist als das allgemeine Reibungsmoment, das an dem Gewindeschritt jeder Büchse durch das Verschrauben der Abzugsschnecke erzeugt ist.

2. System zur Abbau-Extraktion für eine Turbomaschine gemäß dem voranstehenden Anspruch, **dadurch gekennzeichnet, dass** der konische Teil des Kopfes jeder Extraktionsbüchse (10, 210) der genannten Vielzahl einen Neigungswinkel $\alpha$ im Verhältnis zur Längsachse der Büchse aufweist.

3. System zur Abbau-Extraktion für eine Turbomaschine gemäß dem voranstehenden Anspruch, **dadurch gekennzeichnet, dass** der Neigungswinkel $\alpha$ zwischen 10° und 60° inbegriffen ist.

4. System zur Abbau-Extraktion für eine Turbomaschine gemäß Anspruch 2, **dadurch gekennzeichnet, dass** der Neigungswinkel $\alpha$ gleich 45° ist.

5. System zur Abbau-Extraktion für eine Turbomaschine gemäß einem der voranstehenden Ansprüche, **dadurch gekennzeichnet, dass** es eine Vielzahl von Abzugsschnecken umfasst, die einen Gewindeschritt aufweisen, der zum Zusammenwirken mit der genannten Vielzahl von Extraktionsbüchsen (10, 210) geeignet ist.

**Claims**

1. Disassembly extraction system for a turbine machine comprising :

    - a first part of revolution with an attachment flange (110) and a second part of revolution with an attachment flange (120), the two parts of revolution being assembled by interference fit at their attachment flange;
    - a plurality of extraction sleeves (10, 210) each one comprising:

        - a head (11, 211) ;
        - a cylindrical-shaped body (12, 212), the internal part of the cylindrical body (12, 212) having a screw thread adapted to enable screwing of an extraction screw ;

    said attachment flange (110) of the first part of revolution having a plurality of orifices (111) distributed around the periphery of said flange (110) adapted to hold said extraction sleeves (10, 210) ;
    being **characterised in that** the head present a conical part forming a friction means adapted to come into contact with the first parts of revolution, said friction means being sized so as to determine a limiting slip torque higher than the friction torque generated at each sleeve screw thread by screwing the extraction screw.

2. Disassembly extraction system for a turbine machine according to the previous claim, **characterised in that** the angle of inclination of the conical part of the head of each extraction sleeve (10, 210) of the said plurality relative to the longitudinal axis of the sleeve is equal to $\alpha$.

3. Disassembly extraction system for a turbine machine according to the previous claim, **characterised in that** the angle of inclination $\alpha$ is between 10° and 60°.

4. Disassembly extraction system for a turbine machine according to claim 2, **characterised in that** the angle of inclination $\alpha$ is equal to 45°.

5. Disassembly extraction system for a turbine machine according to the previous claims, **characterised in that** it includes a plurality of extraction screws with a screw thread adapted to cooperate with said plurality of extraction sleeves (10, 210).

**Fig. 1**

**Fig. 2**

**Fig. 3**

**EP 3 200 957 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008193289 A